# Europäisches Patentamt
# European Patent Office
# Office européen des brevets

(19)

(11) Veröffentlichungsnummer: **0 058 241**
**B1**

(12)

# EUROPÄISCHE PATENTSCHRIFT

(45) Veröffentlichungstag der Patentschrift:
**12.06.85**

(51) Int. Cl.⁴: **H 04 L 11/00**

(21) Anmeldenummer: **81109149.5**

(22) Anmeldetag: **28.10.81**

(54) **Verfahren und Schaltungsanordnung zum Übertragen von Datensignalen und Signalisierungsinformationen zwischen Datenendgeräten, die über Vermittlungsstellen eines Fernmeldenetzes miteinander verbunden sind.**

(30) Priorität: **09.02.81 DE 3104514**

(43) Veröffentlichungstag der Anmeldung:
**25.08.82 Patentblatt 82/34**

(45) Bekanntmachung des Hinweises auf die Patenterteilung:
**12.06.85 Patentblatt 85/24**

(84) Benannte Vertragsstaaten:
**AT BE CH FR GB IT LI NL SE**

(56) Entgegenhaltungen:
EP - A.- 0 024 617
DE - A - 2 748 556
DE - B - 2 930 420

**INTERNATIONAL CONFERENCE ON COMMUNICATIONS, 8.-12. Juni 1980, Seattle, Band 2, IEEE NEW YORK (US) I. SAKAKIBARA et al.: "An ISDN system architecture" Seiten 27.5.1 - 27.5.5**
**INTERNATIONAL CONFERENCE ON COMMUNICATIONS, 10.-14. Juni 1979, Boston, Band 2, IEEE NEW YORK (US) A.g. ORBELL: "Preparations for evolution towards an integrated services digital network" Seiten 29.1.1 - 29.1.6**

(73) Patentinhaber: **Siemens Aktiengesellschaft, Berlin und München Wittelsbacherplatz 2, D-8000 München 2 (DE)**

(72) Erfinder: **Thomanek, Ulrich Franz, Dr., Wendl-Dietrich-Strasse 6, D-8000 München 19 (DE)**
Erfinder: **Kammerl, Anton, Dr., Weiherweg 3, D-8031 Gröbenzell (DE)**

## Beschreibung

Die Erfindung bezieht sich auf Verfahren und auf eine Schaltungsanordnung zum Übertragen von Datensignalen und Signalisierungsinformationen zwischen Datenendgeräten, die über Vermittlungsstellen eines Fernmeldenetzes miteinander verbunden sind, in welchem für die Übertragung der Datensignale und der Signalisierungsinformationen voneinander getrennte Datenübertragungswege und Signalisierungswege vorgesehen sind und in welchem die Datenübertragungswege für die Übertragung von von Datensignalen verschiedenen Signalen mitausnutzbar sind, wobei die Herstellung und die Auslösung von Verbindungen zwischen Datenendgeräten dadurch erfolgt, dass der jeweils in Frage kommenden Vermittlungsstelle gesonderte Signalisierungsinformation über den Signalisierungsweg übertragen werden.

Zur Übertragung von Datensignalen und Signalisierungsinformationen ist es bereits bekannt (Zeitschrift «telcom report» 2(1979), Heft 4, Seiten 254 bis 261, insbesondere Seiten 258, 259), die Datensignale über einen 64-kbit/s-Einheitskanal und die Signalisierungsinformation normalerweise im sogenannten «out-slot»-Betrieb über einen gesondert vorgesehenen 8-kbit/s-Signalisierungskanal zu übertragen. Zusätzlich ist es jedoch dabei möglich, mit einer «in-slot»-Signalisierung innerhalb des 64-kbit/s-Einheitskanals bzw. -Nutzkanals zu arbeiten. Ferner ist es in diesem Zusammenhang bekannt, für die Text- und Datenkommunikation sowie auch für die erweiterte Fernsprechkommunikation mit einer gesonderten end-to-end-Signalisierung bzw. -Steuerung von Teilnehmerstelle zu Teilnehmerstelle zu arbeiten, wobei die «in-slot»-Signalisierungsverfahren benutzt werden können.

Im Zusammenhang mit einem geplanten Dienste integrierenden digitalen Netz (ISDN) ist es bereits bekannt (Tagungsband zur Konferenz «EUROCON 80», Stuttgart, März 1980, Seiten 233 bis 236), in einem 64-kbit/s-Einheitskanal Sprachsignale und Faksimilesignale nach dem Zeitmultiplexprinzip zu übertragen, und zwar in der Weise, dass für die verschiedenen Signalarten jeweils dieselbe Bitfolgefrequenz benutzt wird. Für eine end-to-end-Signalisierung wird dabei jedoch ein 8-kbit/s-Signalisierungskanal benutzt.

Es ist ferner bekannt, «ICC'79 Conference Report», Seite 29.1.4), zwischen Teilnehmerstellen eines ISDN-Fermeldesystems eine Teilnehmer-Signalisierung durchzuführen. Für diese Teilnehmer-Signalisierung soll nicht das vorhandene Signalisierungssystem benutzt werden, sondern es soll im Nutzkanal (in-band) die betreffende Teilnehmer-Signalisierung vorgenommen werden. Dadurch gelingt es jedoch noch nicht, Datenendgeräte in optimaler Weise in Datenübertragungsvorgänge einbeziehen zu können.

Es ist schliesslich auch schon eine Zweigeschwindigkeits-Vollduplex-Datenübertragungsanlage bekannt (DE-OS 27 48 556), bei der der Verbindungsaufbau zwischen zwei Stationen in unterschiedlicher Weise erfolgt, und zwar je nachdem, mit welcher Datenübertragungsrate gearbeitet werden soll. Im einen Fall erfolgt der Verbindungsaufbau von einer rufenden Station zu einer gerufenen Station dadurch, dass in der rufenden Station die Rufnummer der anzurufenden bzw. gerufenen Station gewählt wird, woraufhin eine Rufrückmeldung zur rufenden Station hin erfolgt. Nach einer Verzögerung von etwa zwei Sekunden wird in der gerufenen Station der dort enthaltene Sender eingeschaltet, und anschliessend wird ein Markierungszeichen zur rufenden Station übertragen. Nach einer kurzen Verzögerung beginnt die Datenübertragung, wobei in einem unteren Frequenzband ein stetiges Markierungszeichen übertragen wird. Daraufhin erfolgt die Datenübertragung mit einer relativ niedrigen Geschwindigkeit. Zur Abwicklung einer Datenübertragung mit einer hohen Datenübertragungsrate wird die Verbindung von der rufenden Station zur gerufenen bzw. anzurufenden Station prinzipiell in der gleichen Weise aufgebaut, wie dies zuvor angegeben worden ist. Nach Einschalten des Senders der gerufenen Station und dem Übertragen eines Markierungszeichens im oberen Frequenzband zu der rufenden Station hin wird jedoch der Sender der rufenden Station eingeschaltet, woraufhin von der rufenden Station zu der gerufenen Station ein Markierungszeichen im unteren Frequenzband übertragen wird. Daraufhin schaltet der Sender der gerufenen Station auf die hohe Geschwindigkeitsbetriebsart um, und anschliessend wird ein Markierungszeichen im oberen Frequenzband zu der rufenden Station übertragen. Damit erfolgt die Datenübertragung zwischen den beiden Stationen nunmehr mit der hohen Geschwindigkeit.

Es hat sich gezeigt, dass die vorstehend betrachteten bekannten Arten der Übertragung von Signalisierungsinformationen zwischen Datenendgeräten nicht ausreichen, um die betreffenden Datenendgeräte in optimaler Weise in Datenübertragungsvorgänge einbeziehen zu können. Untert einer optimalen Einbeziehung von Datenendgeräten in Datenübertragungsvorgänge ist insbesondere zu verstehen, dass diese Datenendgeräte für Datenübertragungen nur solange benutzt werden, wie dies tatsächlich auch nur erforderlich ist. Vor und nach der jeweiligen Datensignalübertragung sollen die betreffenden Datenendgeräte hingegen für andere Zwecke ausgenutzt werden können, beispielsweise zur Sammlung von im Bereich des jeweiligen Datenendgerätes anfallendes Datensignalen.

Der Erfindung liegt nun die Aufgabe zugrunde, einen Weg zu zeigen, wie auf relativ einfache Weise Datensignale und Signalisierungsinformationen zwischen Datenendgeräten übertragen werden können, so dass diese Datenendgeräte jeweils in optimaler Weise in Datenübertragungsvorgänge einbezogen werden können.

Gelöst wird die vorstehend aufgezeigte Aufgabe bei Verfahren der eingangs genannten Art erfindungsgemäss durch die in den kennzeichnenden Teilen der Ansprüche 1 und 2 angegebenen Massnahmen.

Die Erfindung bringt den Vorteil mit sich, dass auf relativ einfache Weise die optimale Einbeziehung der Datenendgeräte in Datenübertragungsvorgänge erreicht ist. Dabei erfahren die den Beginn und das Ende der jeweiligen Datenübertragung betreffenden Steuervorgänge keine unnötigen Verzögerungen, da nämlich die für die Steuerung dieser Vorgänge massgebenden Signalisierungsinformationen lediglich über den in Frage kommenden Datenübertragungsweg übertragen werden, ohne dabei einer zusätzlichen Aus- bzw. Bewertung unterzogen zu werden. Eine derartige Aus- bzw. Bewertung erfolgt jedoch bezüglich der über den eigentlichen Signalisierungskanal übertragenen Signalisierungsinformationen.

Zur Durchführung des Verfahrens gemäss der Erfindung ist es zweckmässig, eine Schaltungsanordnung zu verwenden, die dadurch gekennzeichnet ist, dass jedem Datenendgerät eine Steuerschaltung zugehörig ist, die die Weiterleitung der von dem betreffenden Datenendgerät abgegebenen Datensignale in einem Übertragungskanal und der Signalisierungsinformationen in einem gesonderten Signalisierungskanal an das Vermittlungsnetz bewirkt, dass die dem jeweiligen Datenendgerät zugehörige Steuerschaltung die von dem Vermittlungsnetz her über die voneinander getrennten Übertragungskanäle zugeführten Datensignale und Signalisierungsinformationen zu dem zugehörigen Datenendgerät weiterzuleiten gestattet und dass die jeweilige Steuerschaltung die Weiterleitung von Steuersignalen von ihrem zugehörigen Datenendgerät her über den mit diesem verbundenen, für die Datensignalübertragung vorgesehenen Datenübertragungskanal bewirkt bzw. über diesen Datenübertragungskanal zugeführte Quittungssignale direkt an das zugehörige Datenendgerät weiterzuführen gestattet. Die Erfindung bringt den Vorteil eines relativ geringen schaltungstechnischen Aufwands mit sich, durch den die jeweils in eine Datenübertragungsverbindung einbezogenen Datenendgeräte in optimaler Weise Daten übertragen können, d.h. in einer solchen Weise, dass zum einen keine Datensignale verlorengehen und dass zum anderen die betreffenden Datenendgeräte nur solange im Sendezustand bzw. im Empfangszustand sind, wie dies für die Datensignalübertragung erforderlich ist.

Anhand von Zeichnungen wird die Erfindung nachstehend beispielsweise näher erläutert.

Fig. 1 zeigt schematisch in einem Blockschaltbild einen möglichen Aufbau einer Schaltungsanordnung gemäss der Erfindung.

Fig. 2 zeigt ein Signaldiagramm, welches zur Erläuterung der Schaltungsanordnung gemäss Fig. 1 herangezogen wird.

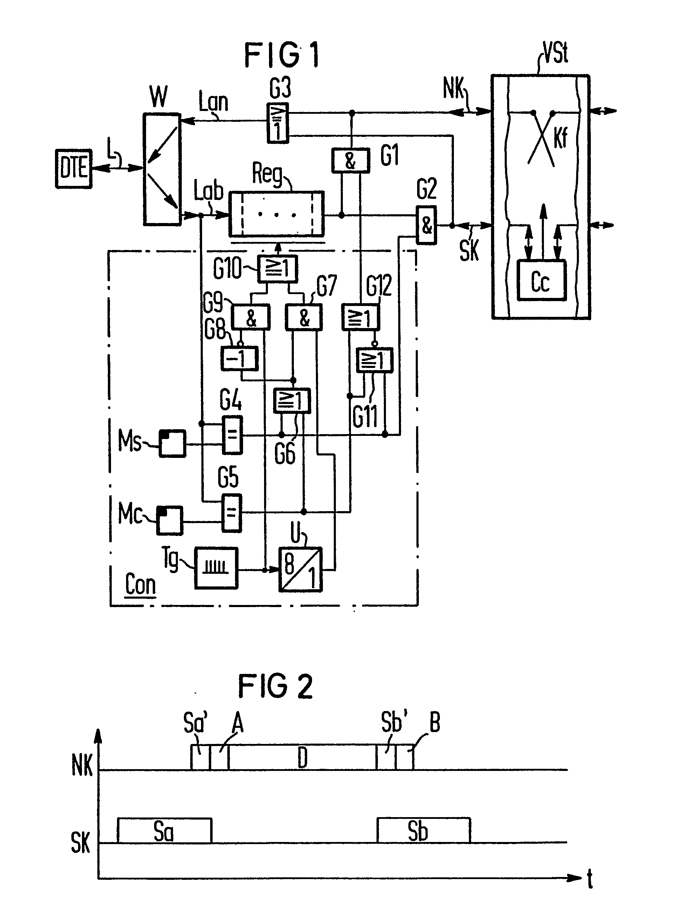

In Fig. 1 ist ein Datenendgerät DTE angedeutet, welches Datensignale und Signalisierungsinformationen abzugeben und aufzunehmen vermag. Das Datenendgerät DTE kann entweder ein einzelnes Gerät sein, wie ein Datensichtgerät mit zugehöriger Dateneingabeschaltung, oder aber es kann durch eine Mehrzahl von Geräten gebildet sein, zu denen ein Faksimilegerät, eine Datensicht- und Dateneingabestation, eine Fernschreibmaschine und gegebenenfalls auch ein Fernsprechgerät gehören können.

Das in Fig. 1 angedeutete Datenendgerät DTE ist über eine Leitung L mit einer Weichenschaltung W verbunden. Auf der Leitung L können Signale in beiden Übertragungsrichtungen übertragen werden, und zwar in einem bestimmten vorgegebenen Übertragungsband. Dies bedeutet, dass die zwischen dem Datenendgerät DTE und der Weichenschaltung W in der jeweiligen Richtung übertragenen Signale in jedem Fall sogenannte Inband-Signale sind. Dies trifft sowohl für Datensignale als auch für Signalisierungsinformationen zu.

Die Weichenschaltung W ist mit einem Signale abgebenden Ausgangsanschluss mit einer Leitung Lab verbunden, über die Signale in abgehender Übertragungsrichtung übertragen werden. Diese Leitung ist mit dem Eingang eines Registers Reg verbunden, bei dem es sich um ein Schieberegister handeln mag. Das Register Reg ist ausgangsseitig mit den einen Eingängen zweier UND-Glieder G1 und G2 verbunden. Das UND-Glied G1 ist ausgangsseitig an einem als Nutzkanal zu bezeichnenden Datenübertragungskanal NK angeschlossen, bei dem es sich beispielsweise um einen 64-kbit/s-Einheitskanal handeln kann. Das UND-Glied G2 ist ausgangsseitig an einem Signalisierungskanal SK angeschlossen, bei dem es sich um einen 8-kbit/s-Signalisierungskanal handeln kann. An diesen beiden Kanälen NK und SK ist ferner ein ODER-Glied G3 eingangsseitig angeschlossen. Mit seinem Ausgang ist das ODER-Glied G3 über eine Leitung Lan an einem Eingangsanschluss der Weichenschaltung W angeschlossen. Bezüglich dieser Weichenschaltung sei noch angemerkt, dass sie die über die Leitung Lan zugeführten Signale lediglich über die Leitung L weiterzuleiten gestattet, während sie ihr über die Leitung L zugeführte Signale lediglich über die Leitung Lab abzugeben gestattet.

Dem in Fig. 1 angedeuteten Datenendgerät DTE ist eine Steuerschaltung Con zugehörig. Diese Steuerschaltung Con ist eingangsseitig mit jeweils durch ein Äquivalenz-Verknüpfungsglied G4, G5 angedeuteten Vergleichern an der Leitung Lab angeschlossen. Der Vergleicher bzw. das Verknüpfungsglied G4 ist eingangsseitig ferner am Ausgang eines Speichers Ms angeschlossen. In diesem Speicher sind im vorliegenden Fall Angaben über diejenigen Signalisierungsinformationen enthalten, die von dem Datenendgerät DTE über den Signalisierungskanal SK weiterzuleiten sind. Stellt der Vergleicher G4 fest, dass eine derartige Signalisierungsinformation über die Leitung Lab abgegeben worden ist, so spricht er darauf durch Abgabe eines Binärsignals «1» an. Entsprechendes gilt für die anderen Vergleicher G5, der eingangsseitig mit einem Speicher Mc verbunden ist. In diesem Speicher Mc sind Angaben über diejenigen Steuersignale enthalten, die von dem Datenendgerät DTE abgegeben werden können, um über den Nutzkanal NK weitergeleitet zu werden.

An den Ausgängen der Vergleicher bzw. Äquivalenz-Verknüpfungsglieder G4 und G5 ist ein ODER-Glied G6 mit seinen Eingängen angeschlossen. Dieses ODER-Glied ist mit seinem Ausgang an einem Eingang eines UND-Gliedes G7 angeschlossen. Ausserdem ist das ODER-Glied G6 über einen Negator G8 an einem Eingang eines weiteren UND-Gliedes G9 angeschlossen. Die beiden UND-Glieder G7 und G9 sind ausgangsseitig über ein ODER-Glied G10 mit dem Takteingang des Registers Reg verbunden.

Mit einem weiteren Eingang ist das zuvor erwähnte UND-Glied G7 am Ausgang eines Frequenzuntersetzers U angeschlossen, der eingangsseitig am Ausgang eines Taktgenerators Tg angeschlossen ist. Der Untersetzer U nimmt eine Untersetzung der ihm eingangsseitig zugeführten Taktimpulse entsprechend einem vorgegebenen Untersetzungsfaktor von beispielsweise 8 vor. Am Ausgang des erwähnten Taktgenerators Tg ist ferner das bereits erwähnte UND-Glied G9 mit einem Eingang direkt angeschlossen.

An den Ausgängen der beiden Vergleicher bzw. Äquivalenz-Verknüpfungsglieder G4 und G5 ist ferner ein NOR-Glied G11 mit seinen Eingängen angeschlossen. Am Ausgang des NOR-Gliedes G11 ist ein ODER-Glied G12 mit einem Eingang angeschlossen. Mit einem weiteren Eingang ist dieses Oder-Glied G12 direkt am Ausgang des Vergleichers bzw. Äquivalenz-Verknüpfungsgliedes G5 angeschlossen. Der Ausgang des ODER-GLiedes G12 ist mit einem Eingang des oben bereits erwähnten UND-Gliedes G1 verbunden. Der zuvor erwähnte Vergleicher G4 ist ausgangsseitig noch direkt mit einem weiteren Eingang des ebenfalls oben bereits erwähnten UND-Gliedes G2 verbunden.

Die in Fig. 1 dargestellte Schaltungsanordnung ist mit ihrem Datenübertragungskanal bzw. Nutzkanal NK und mit ihrem Signalisierungskanal SK mit einer Vermittlungsstelle VSt verbunden, die zu einem gegebenenfalls eine Mehrzahl von Vermittlungsstellen umfassenden Fernmeldenetz gehört. Zu der in Fig. 1 angedeuteten Vermittlungsstelle VTs gehört eine als Koppelfeld Kf angedeutete Durchschalteeinrichtung, deren Durchschaltung mittels eines Einstellers Cc vorgenommen wird. Dieser Einsteller Cc ist dazu eingangs- und ausgangsseitig mit den verschiedenen Signalisierungskanälen verbunden.

Im folgenden wird die Arbeitsweise der in Fig. 1 dargestellten Schaltungsanordnung unter Bezugnahme auf Fig. 2 erläutert. Zunächst sei angenommen, dass von dem Datenendgerät DTE weder Datensignale noch Signalisierungsinformationen noch Steuersignale noch sonstige Signale abgegeben werden. In diesem Fall geben die Vergleicher G4 und G5 ausgangsseitig jeweils ein «0»-Signal ab, was zur Folge hat, dass das UND-Glied G9 übertragungsfähig ist, so dass von dem Taktgenerator Tg abgegebene Taktimpulse zu dem Takteingang des Registers Reg hin gelangen. Da ausserdem vom Ausgang des NOR-Gliedes G11 ein «1»-Signal abgegeben wird, welches über das ODER-Glied G12 dem einen Eingang des UND-Gliedes G1 zugeführt wird, werden sämtliche über die Leitung Lab dem Register Reg zugeführte Bits aus diesem Register herausgeschoben und an den Nutzkanal NK abgegeben. Im vorliegenden Fall wird es sich dabei lediglich um «0»-Binärsignale handeln, die infolge fehlender Einstellung der Vermittlungsstelle VSt keine weiteren Auswirkungen haben. In diesem Zusammenhang sei angemerkt, dass es schaltungstechnisch auch ohne weiteres möglich ist, die Abgabe derartiger Binärsignale zu unterdrücken. So ist es denkbar, das UND-Glied G1 erst dann in den übertragungsfähigen Zustand zu steuern, wenn zuvor ein bestimmtes Datensignal von dem zugehörigen Datenendgerät DTE abgegeben und in der diesem zugehörigen Steuerschaltung Con erkannt worden ist.

Um die betrachtete Schaltungsanordnung in einen Zustand zu versetzen, in welchem eine Signalübertragung erfolgen kann, wird von dem Datenendgerät DTE zunächst eine für einen Verbindungsaufbau erforderliche Signalisierungsinformation abgegeben. Diese Signalisierungsinformation ist in Fig. 2 in der Zeile SK mit Sa angedeutet. Mit Abgabe dieser Signalisierungsinformation Sa wird von dem in Fig. 1 angedeuteten Vergleicher G4 ein Binärsignal «1» abgegeben. Demgemäss wird eine dieser Signalisierungsinformation entsprechende Angabe in dem Speicher Ms gespeichert sein.

Auf das Auftreten des erwähnten Binärsignals «1» hin werden nunmehr die UND-Glieder G2 und G7 in den übertragungsfähigen Zustand gebracht. Die UND-Glieder G1 und G9 gelangen hingegen in den Sperrzustand. Damit ist der Ausgang des Registers Reg über das UND-Glied G2 nunmehr mit dem Signalisierungskanal SK verbunden. Dem Takteingang des Registers Reg werden Taktimpulse vom Ausgang des Untersetzers U zugeführt, d.h. Taktimpulse, die beispielsweise mit einer Bitfolgerate von 8 kbit/s auftreten. Mit dieser Bitfolgerate werden die die Signalisierungsinformation Sa bildeten Bits an die Vermittlungsstelle VSt weitergeleitet.

In der Vermittlungsstelle VSt werden die die zuvor erwähnte Signalisierungsinformation Sa bildenden Bits von dem zugehörigen Einsteller Cc aufgenommen und verarbeitet. Diese Verarbeitung läuft im vorliegenden Fall darauf hinaus, dass die zugehörige Durchschalteeinrichtung Kf in gewünschter Weise eingestellt wird. An dieser Stelle sei angemerkt, dass die betreffende Einstellung entweder eine Verbindung lediglich zu dem in Fig. 1 angedeuteten Endgerät DTE hin bewirkt oder aber schon eine Verbindung zu einem entsprechenden anderen Datenendgerät, zu welchem von dem in Fig. 1 angedeuteten Datenendgerät DTE Datensignale auszusenden sind. Diese Einstellvorgänge dauern in jedem Falle eine gewisse Zeit, während der noch keine Datensignalübertragung erfolgen kann.

Wie in Fig. 2 angedeutet, werden während eines Teiles der Zeitspanne der Übertragung der Signalisierungsinformation Sa Steuerinformationen Sa' über den Datenübertragungskanal bzw. Nutzkanal NK abgegeben. In diesem Zusammenhang ist beispielsweise vorstellbar, dass die Signalisierungsinformation Sa aus mehreren Informationsteilen besteht, deren letzter Teil — z.B. ein besonderes Schlusszeichen — sowohl für die Signalisierungsinformation Sa als auch für die Steuersignalinformation Sa' ausgenutzt wird. Demgemäss werden in diesem Fall beide Vergleicher G4 und G5 gemäss Fig. 1 ausgangsseitig jeweils ein Binärsignal «1» abgeben, was dazu führt, dass nunmehr zusätzlich zu den UND-Gliedern G2 und G7 noch das UND-Glied G1 in den übertragungsfähigen Zustand gelangt. Damit wird der in dem Register Reg enthaltene Informationsteil Sa' im Takte der von dem Frequenzuntersetzer U abgegebenen Taktimpulse sowohl über den Signalisierungskanal SK als auch über den Datenübertragungskanal NK abgegeben. Der über den Datenübertragungskanal NK abgegebene Informationsteil Sa' stellt im vorliegenden Fall ein Steuersignal dar, welches dem Datenendgerät zuzuführen ist, welchem von dem betrachteten Datenendgerät aus Datensignale zuzuführen sind. Das für die Aufnahme dieses Steuersignals Sa' bestimmte Datenendgerät als Empfangs-Datenendgerät wird durch das betreffende Steuersignal Sa' für die Datensignalaufnahme erst wirksam geschaltet. Ein die Wirksamschaltung des betreffenden Empfangs-Datenendgerätes angebendes Quittungssignal wird dann von diesem Empfangs-Datenendgerät über dessen Datenübertragungs- bzw. Nutzkanal abgegeben, um über die Vermittlungsstelle VSt und den in Fig. 1 angedeuteten Nutzkanal Nk zu dem in Fig. 1 angedeuteten Datenendgerät DTE hin übertragen zu werden. In diesem als Sende-Datenendgerät zu betrachtenden Datenendgerät DTE bewirkt dieses Quittungssignal die Auslösung der eigentlichen Aussendung von Datensignalen. Diese Datensignale werden dann lediglich über den in Fig. 1 angedeuteten Datenübertragungskanal NK übertragen. In diesem Fall geben nämlich die beiden Vergleicher G4 und G5 ausgangsseitig jeweils ein Binärsignal «0» ab, wodurch das NOR-Glied G11 ein das UND-Glied G1 in den übertragungsfähigen Zustand steuerndes Binärsignal «1» abgibt. Dem Takt- bzw. Schiebeeingang des Registers Reg werden in diesem Fall über das im übertragungsfähigen Zustand befindliche UND-Glied G9 und das ODER-Glied G10 die vom Taktgenerator Tg mit hoher Taktfolgefrequenz abgegebenen Taktimpulse zugeführt.

Bezüglich der nunmehr stattfindenden Datensignalübertragung sei noch angemerkt, dass die von dem in Fig. 1 angedeuteten Datenendgerät DTE abgegebenen Datensignale — in Fig. 2 mit D bezeichnet — wie alle übrigen von diesem Datenendgerät abgegebenen Signale durch das Register reg hindurchgeleitet werden. Am Ende der betreffenden Datensignalübertragung gibt das Sende-Datenendgerät dann ein Endesignal ab, welches in Fig. 2 mit Sb' angedeutet ist. Dieses Endesignal stellt ein Steuersignal für das Empfangs-Datenendgerät dar, welches auf die Aufnahme dieses Steuersignals Sb' hin unwirksam geschaltet wird, d.h. wieder in seinen Ausgangszustand zurückkehrt. Das betreffende Steuersignal Sb' kann im übrigen zugleich Teil einer in Fig. 2 mit Sb angedeuteten Signalisierungsinformation sein. Während das Steuersignal Sb' wie das Steuersignal Sa' und das Quittungssignal A sowie die Datensignale D über den Nutzkanal NK übertragen werden, wird die Signalisierungsinformation Sb wie die Signalisierungsinformation Sa über den Signalisierungskanal SK übertragen. Die Signalisierungsinformation Sb kann zusätzlich zu der durch das zuvor erwähnte Steuersignal Sb' gegebenen Information noch weitere Informationen umfassen, die für eine Verbindungsauslösung benötigt werden. Dabei ist allerdings zu berücksichtigen, dass vor tatsächlich erfolgender Verbindungsauslösung von dem unwirksam gesteuerten bzw. abgeschalteten Empfangs-Datenendgerät noch ein Quittungssignal zu dem Sende-Datenendgerät DTE hin zu übertragen ist. Dieses Quittungssignal ist in Fig. 2 mit B bezeichnet. Das betreffende Quittungssignal B wird dabei ebenfalls über den Datenübertragungs- bzw. Nutzkanal übertragen, um das Sende-Datenendgerät DTE derart anzusteuern, dass dessen Sendebetrieb nunmehr beendet wird. Wird ein derartiges Quittungssignal nicht übertragen, so können verschiedene Massnahmen getroffen werden. Entweder kann nach einer vorgegebenen Zeitspanne das Sende-Datenendgerät zwangsweise abgeschaltet werden, oder aber dieses Sende-Datenendgerät wird unter Vermeidung der zuvor begonnenen Verbindungsauslösung veranlasst, mit einer erneuten Datensignalübertragung zu beginnen, wozu zunächst wieder ein Steuersignal Sa' auszusenden ist. Der zuletzt erwähnte Betriebsfall kann gegebenenfalls auch die Übertragung eines entsprechenden Übertragungsanforderungssignals von dem Empfangs-Datenendgerät zu dem Sende-Datenendgerät einschliessen.

Im Zusammenhang mit der zuvor unter Bezugnahme auf Fig. 2 betrachteten Übertragung von verschiedenen Signalen zwischen zwei Datenendgeräten dürfte somit ersichtlich geworden sein, dass lediglich die Datensignale D mit einer relativ hohen Datenübertragungsrate von beispielsweise 64 kbit/s übertragen werden, während alle übrigen Signale, also Signalisierungsinformationen, Steuersignale und Quittungssignale mit einer demgegenüber geringeren Datenübertragungsrate, beispielsweise mit 8 kbit/s übertragen werden. Durch die Übertragung der Steuersignale und Quittungssignale über für die Datensignalübertragung zu benutzende Datenübertragungskanäle und nicht über die Signalisierungskanäle ist dabei sichergestellt, dass dasjenige Datenendgerät, welches Datensignale abzugeben hat, erst dann in den Sendezustand gesteuert wird, wenn das für die Aufnahme der Datensignale vorgesehene Empfangs-Datenendgerät verfügbar und wirksam geschaltet ist. Das zuerst erwähnte Sende-Datenendgerät verbleibt dabei im übrigen nur solange im Sendezustand, wie dies durch die Wirksamschaltung des Empfangs-Datenendgerätes festgelegt ist. Erst mit der Unwirksamschaltung des Empfangs-Datenendgerätes und mit der daraufhin erfolgenden Abgabe eines entsprechenden Quittungssignals wird das Sende-Datenendgerät aus einem Sendezustand herausgeführt und in seinen Ausgangs(Ruhe)-Zustand gebracht. Damit laufen also die Datenübertragungsvorgänge zwischen den Datenendgeräten in der erwünschten optimalen Weise ab.

**Patentansprüche**

1. Verfahren zum Übertragen von Datensignalen (D) und Signalisierungsinformationen (Sa, Sb) zwischen Datenendgeräten (DTE), die über Vermittlungsstellen (VSt) eines Fernmeldenetzes miteinander verbunden sind, in welchem für die Übertragung der Datensignale (D) und der Signalisierungsinformationen (Sa, Sb) voneinander getrennte Datenübertragungswege (NK) und Signalisierungswege (SK) vorgesehen sind und in welchem die Datenübertragungswege (NK) für die Übertragung von von Datensignalen (D) verschiedenen Signalen (Sa', A, Sb', B) mitausnutzbar sind, wobei die Herstellung und die Auslösung von Verbindungen zwischen Datenendgeräten (DTE) dadurch erfolgt, dass der jeweils in Frage kommenden Vermittlungsstelle (VSt) gesonderte Signalisierungsinformationen (Sa, Sb) über den Signalisierungsweg (SK) übertragen werden, dadurch gekennzeichnet, dass während eines Teiles der Zeitspanne, innerhalb der von einem Datenendgerät (DTE) eine zur Herstellung einer Verbindung zu einem anderen Datenendgerät dienende Signalisierungsinformation (Sa) über den Signalisierungsweg (SK) abgegeben wird, ein von dem genannten einen Datenendgerät vor der Datensignalabgabe abgegebenes, der Wirksamschaltung des für eine Datensignalaufnahme bestimmten anderen Datenendgerätes dienendes Steuersignal (Sa') und ein die Wirksamschaltung des betreffenden anderen Datenendgerätes angebendes Quittungssignal (A) von diesem anderen Datenendgerät an das betreffende eine Datenendgerät zur Auslösung der Aussendung von Datensignalen (D) über den für die Datensignalübertragung zwischen den beiden miteinander zu verbindenden bzw. verbundenen Datenendgeräten zu benutzenden Datenübertragungsweg (NK) ohne eine zusätzliche Aus- bzw. Bewertung in der jeweiligen Vermittlungsstelle (VSt) übertragen werden.

2. Verfahren zum Übertragen von Datensignalen (D) und Signalisierungsinformationen (Sa, Sb) zwischen Datenendgeräten (DTE), die über Vermittlungsstellen (VSt) eines Fernmeldenetzes miteinander verbunden sind, in welchem für die Übertragung der Datensignale (D) und der Signalisierungsinformationen (Sa, Sb) voneinander getrennte Datenübertragungswege (NK) und Signalisierungswege (SK) vorgesehen sind und in welchem die Datenübertragungswege (NK) für die Übertragung von von Datensignalen (D) verschiedenen Signalen (Sa', A, Sb', B) mitausnutzbar sind, wobei die Herstellung und die Auslösung von Verbindungen zwischen Datenendgeräten dadurch erfolgt, dass der jeweils in Frage kommenden Vermittlungsstelle (VSt) gesonderte Signalisierungsinformationen (Sa, Sb) über den Signalisierungsweg (SK) übertragen werden, dadurch gekennzeichnet, dass während eines Teiles der Zeitspanne, innerhalb der von einem Datenendgerät (DTE) eine zur Auslösung einer zu einem anderen Datenendgerät hin bestehenden Verbindung führende Signalisierungsinformation (Sb) aber den Signalisierungsweg (SK) abgegeben wird, ein von dem genannten einen Datenendgerät (DTE) abgegebenes, der Unwirksamschaltung des für die Datensignalaufnahme benutzten anderen Datenendgerätes dienendes Steuersignal (Sb') und ein die Unwirksamschaltung des betreffenden anderen Datenendgerätes angebendes Quittunssignal (B) von diesem anderen Datenendgerät an das betreffende eine Datenendgerät (DTE) zur Beendigung des Sendebetriebs über den für die Datensignalübertragung zwischen den beiden miteinander verbundenen Datenendgeräten benutzten Datenübertragungsweg (NK) ohne eine zusätzliche Aus- bzw. Bewertung in der jeweiligen Vermittlungsstelle (VSt) übertragen werden.

3. Schaltungsanordnung zur Durchführung des Verfahrens nach Anspruch 1 oder 2, dadurch gekennzeichnet, dass jedem Datenendgerät (DTE) eine Steuerschaltung (Con) zugehörig ist, die die Weiterleitung der von dem betreffenden Datenendgerät (DTE) abgegebenen Datensignale (D) in einem Datenübertragungskanal (NK) und der Signalisierungsinformationen (Sa, Sb) in einem gesonderten Signalisierungskanal (SK) an das Vermittlungsnetz (VSt) bewirkt, dass die dem jeweiligen Datenendgerät (DTE) zugehörige Steuerschaltung (Con) die von dem Vermittlungsnetz (VSt) her über die voneinander getrennten Übertragungskanäle (NK, SK) zugeführten Datensignale (D) und Signalisierungsinformationen (Sa, Sb) zu dem zugehörigen Datenendgerät (DTE) weiterzuleiten gestattet und dass die jeweilige Steuerschaltung (Con) die Weiterleitung von Steuersignalen (Sa', Sb') sowie von Quittungssignalen (A, B) von bzw. zu ihrem zugehörigen Datenendgerät (DTE) über den mit diesem verbundenen, für die Datensignalübertragung vorgesehenen Datenübertragungskanal (NK) bewirkt.

**Claims**

1. A method of transmitting data signals (D) and items of signalling information (Sa, Sb) between data terminal devices (DTE) which are connected to one another via exchanges (VSt) of a telecommunications network in which, for the transmission of the data signals (D) and the items of signalling information (Sa, Sb), there are provided data transmission paths (NK) and signalling paths (SK) which are separate from one another, and in which the data transmission paths (NK) can be additionally used to transmit signals (Sa', A, Sb', B) which differ from data signals (D), where the establishment and clearance of connections between data terminal devices (DTE) takes place in that the exchange (VSt) in question is supplied with special items of signalling information (Sa, Sb) via the signalling path (SK), characterised in that during a part of the interval in which a data terminal device (DTE) emits an item of signalling information (Sa) which serves to establish a connection to another data terminal device, via the signalling path (SK), a control signal (Sa') emitted from the aforementioned first data terminal device prior to the data signal emission and serving to actuate the other data terminal device designated for data signal reception, and an acknowledgement signal (A) indicating the actuation of the other data terminal device and transmitted from this other data terminal device to the first data terminal device in order to clear the transmission of data signals (D), are transmitted via the data transmission path (NK) which is to be used for data signal transmission between the two data terminal devices whick are to be connected or are connected to one another, without additional analysis or evaluation in the relevant exchange (VSt).

2. A method of transmitting data signals (D) and items of signalling information (Sa, Sb) between data terminal devices (DTE) which are connected to one another via exchanges (VSt) of a telecommunications network in which, for the transmission of the data signals (D) and the items of signalling information (Sa, Sb), there are provided data transmission paths (NK) and signalling paths (SK) which are separate from one another, and in which the data transmission paths (NK) can be additionally used to transmit signals (Sa', A, Sb', B) which differ from data signals (D), where the establishement and clearance of connections between data terminal devices is carried out in that the exchange (VSt) in question is supplied with special items of signalling information (Sa, Sb) via the signalling path (SK), characterised in that during a part of the interval of time in which a data terminal device (DTE) emits to another data terminal device via the signalling path (SK) an item of signalling information which leads to the clearance of a connection, a control signal (Sb') emitted from the first data terminal device (DTE) in question and serving to de-actuate the other data terminal device used to receive the data signals, and an acknowledgement signal (B) indicating the de-actuation of the other data terminal device and transmitted from this other data terminal device to the first data terminal device (DTE) in order to terminate the transmission operation, are transmitted via the data transmission path (NK), which is used for the data signal transmission between the two data terminal devices which are connected to one another, without additional analysis or evaluation in the relevant exchange (VSt).

3. A circuit arrangement for the execution of the method claimed in claim 1 or 2, characterised in that each data terminal device (DTE) is assigned a control circuit (Con) which causes the data signals (D) which are emitted from the data terminal device (DTE) in question to be forwarded to the exchange network (VSt) in a data transmission channel (NK), and causes the items of signalling information (Sa, Sb) to be forwarded in a special signalling channel (SK), that the control circuit (Con) which is assigned to the data terminal device (DTE) in question permits the data signals (D) and items of signalling information (Sa, Sb), which are supplied from the exchange network (VSt) via the separate transmission channels (NK, SK), to be forwarded to the associated data terminal device (DTE), and that the control circuit (Con) in question causes control signals (Sa', Sb') and acknowledgement signals (A, B) to be forwarded from and to the associated data terminal device (DTE) via the data transmission channel (NK) to which said data terminal device is connected and which is provided for the data signal transmission.

**Revendications**

1. Procédé pour la transmission de signaux de données (D) et d'informations de signalisations (Sa, Sb) entre des terminaux de données (DTE) qui sont interconnectés par des centraux (VSt) d'un réseau de télécommunication, dans lequel sont prévues des voies de transmission de données (NK) et des voies de signalisation (SK) séparées entre elles pour la transmission des signaux de données (D) et des informations de signalisation (Sa, Sb), et dans lequel les voies de transmission de données (NK) sont utilisables ensemble pour la transmission de signaux (Sa', A, Sb', B) différents des signaux de données (D), l'établissement et le déclenchement de liaisons entre terminaux de données (DTE) se faisant en sorte qu'à chaque central (VSt) venant respectivement en cause, des informations séparées de signalisation (Sa, Sb) sont transmises par la voie de signalisation (SK), caractérisé en ce que, pendant une partie du laps de temps à l'intérieur duquel, d'un terminal de données (DTE), est délivrée par la voie de signalisation (SK) une information de signalisation (Sa) servant à établir une connexion vers un autre terminal de données, un signal de commande (Sa') émanant de l'un des terminaux de données cité avant l'envoi du signal de données, et servant au circuit d'efficacité de l'autre terminal de données, spécifié pour une admission de signal de donnée, et un signal d'accusé de réception (A) indiquant le circuit d'efficacité de l'autre terminal de données mentionné à partir de cet autre terminal sont transmis à l'un des terminaux concerné pour le déclenchement de l'émission de signaux de données (D) par l'intermédiaire de la voie de transmission de données (NK) à utiliser pour la transmission de signaux de données entre les deux terminaux de données à relier ou reliées entre eux sans une exploitation ou estimation additionnelle dans le central (VSt) respectif.

2. Procédé pour la transmission de signaux de données (D) et d'informations de signalisation (Sa, Sb) entre terminaux de données (DTE) qui sont interconnectés par des centraux (VSt) d'un réseau de télécommunication, dans lequel, pour la transmission de signaux de données (D) et des informations de signalisation (Sa, Sb) sont prévues des voies séparées entre elles de transmission de données (NK) et de signalisation (SK), et dans lequel les voies de transmission de données (NK) sont exploitables ensemble pour la transmission de signaux (Sa', A, Sb', B) différents des signaux de données (D), l'établissement et le déclenchement de liaisons entre terminaux de données se faisant en sorte, qu'à chaque central (VSt) venant respectivement en cause, des informations séparées de signalisation (Sa, Sb) sont transmises par la voie de signalisation (SK), caractérisé en ce que, pendant une partie du laps de temps à l'intérieur duquel, d'un terminal de données (DTE), est livrée une information de signalisation (Sb), conduisant au déclenchement d'une liaison existante vers un autre terminal par la voie de signalisation (SK), et sont transmis, un signal de commande (Sb') émanant de l'un des terminaux de données cité, servant au circuit d'invalidation de l'autre terminal utilisé pour l'accueil de signal de données, et, un signal d'accusé de réception (B) indiquant le circuit d'invalidation de l'autre terminal mentionné de données allant de cet autre terminal au terminal de données concerné pour faire cesser le mode de transmission par la voie de transmission de données (NK) utilisée pour la transmission de signal de données entre les deux terminaux de données interconnectés sans une exploitation ou estimation additionnelles dans le central respectif (VSt).

3. Montage pour la mise en oeuvre du procédé selon la revendication 1 ou 2, caractérisé en ce qu'à chaque terminal de données (DTE) est affecté un circuit de commande (Con) qui effectue l'acheminement des signaux (D) fournis par le terminal de données (DTE) en question dans un canal de transmission de données (NK) et des informations de signalisation (Sa, Sb) dans un canal séparé de signalisation (SK) vers le réseau de communication (VSt), en ce que le circuit de commande (Con) affecté au terminal respectif de données (DTE) permet d'acheminer, à partir du réseau de communication (VSt) par l'intermédiaire des canaux de transmission séparés entre eux (NK, SK), des signaux de données (D) et des informations de signalisation (Sa, Sb) amenés au terminal de données (DTE) en faisant partie, et en ce que le circuit correspondant de commande (Con) effectue l'acheminement de signaux de commande (Sa', Sb') ainsi que de signaux d'accusé de réception (A, B) provenant ou allant vers son terminal de données ressortissant, par le canal de transmission de données (NK) relié à celui-ci et prévu pour la transmission de signal de données.

## FIG 1

## FIG 2